# EUROPEAN PATENT APPLICATION

(11) **EP 2 913 954 A2**
(43) Date of publication of application: **02.09.2015**
(21) Application number: 13788561.2
(22) Date of filing: 24.07.2013
(51) Int. Cl.: H04L 7/00, G04R 20/00

(54) **METHOD AND DEVICE FOR SYNCHRONIZING TIME IN SHORT DISTANCE**

(30) Priority: 25.10.2012 CN 201210413073
(71) Applicant: ZTE Corporation, Shenzhen, Guangdong 518057 (CN)
(72) Inventor: LIU, Yikang, Shenzhen Guangdong 518057 (CN)
(74) Representative: Brevalex
(86) International application number: PCT/CN2013/080051
(87) International publication number: WO 2013/167079

(57) **Abstract**

Disclosed is a method for synchronizing time in a short distance, comprising: a receiver receiving time service machine local time broadcast by more than one time service machine, and selecting time broadcast by one time service machine as local time of the receiver. Also disclosed is a device for synchronizing time in a short distance for implementing the method. By using the technical solutions in the present invention, compared with the prior art, a cumbersome operation of synchronizing the time in a manual setting process is avoided, and that users of different operators cannot uniformly acquire standard time is avoided. The technical solutions in the present invention enable a time setting manner of a user terminal to be more interesting , and can restore to previous local time at any time after time synchronization is acquired, and a user operation is convenient.

## Description

### TECHNICAL FIELD

The disclosure relates to time synchronization, and in particular to a method and device for short-distance time synchronization.

### BACKGROUND

At present, a mobile terminal has increasingly rich functions, and has gradually replaced a watch in terms of timing and become a preferred way of time recognition for a user. In multi-user collaboration, time synchronization/unification has to be achieved via a mobile terminal.

At present, time of a mobile terminal is mainly set manually by a user, or obtained from a radio network. Time synchronization by manual setting requires excessive user involvement with complicated operations. Time synchronization by obtaining standard time from a radio network requires all users to be served by the same telecom operator, since time provided by different operators may differ. In addition, this can achieve user time synchronization only according to standard time at the operator, but fails to implement time setting according to user preference. In addition, time cannot be restored to that before the setting.

### SUMMARY

In view of this, it is desired that embodiments herein provide a method and device for short-distance time synchronization, enabling time setting according to user preference, enhancing user experience.

To this end, a technical solution herein is implemented as follows.

A method for short-distance time synchronization, includes:
receiving, by a receiver, provider time in one or more time provider broadcasts, selecting the provider time in one of the one or more time provider broadcasts and setting the selected provider time as local time of the receiver.

The method may further include:
in selecting the provider time in one of the one or more time provider broadcasts and setting the selected provider time as local time of the receiver, saving, by the receiver, a difference between the local time just set and previous local time.

The method may further include:
receiving, by the receiver, at least two time provider broadcasts sent by a same provider, and computing a receiving time difference in receiving the at least two time provider broadcasts and a provider time difference between the provider time in the at least two time provider broadcasts; when the receiving time difference is not equal to the provider time difference, not setting the provider time in the most recently received time provider broadcast as the local time of the receiver.

The provider time in one or more time provider broadcasts may include:
receiving, by the receiver through a Wireless Fidelity WiFi network or by Bluetooth, the provider time in the one or more time provider broadcasts.

A time provider broadcast packet may include: information on the provider time;
or information on the provider time and a provider ID;
or information on the provider time, a provider ID, and integrity protection.

A device for short-distance time synchronization includes a receiving unit and a selecting unit.

The receiving unit is configured for: receiving one or more time provider broadcasts.

The selecting unit is configured for: selecting provider time in one of the one or more time provider broadcasts and setting the selected provider time as local time of the device.

The device may further include:
a saving unit configured for: when the selecting unit selects the provider time in one of the one or more time provider broadcasts and sets the selected provider time as the local time of the device, saving a difference between the local time just set and previous local time.

The device may further include a computing unit and a determining unit.

The receiving unit may be further configured for: receiving at least two time provider broadcasts sent by one provider.

The computing unit may be configured for: computing a receiving time difference in receiving the at least two time provider broadcasts and a provider time difference between the provider time in the at least two time provider broadcasts.

The determining unit may be configured for: determining whether the receiving time difference is equal to the provider time difference, and when the two differences are not equal, notifying the selecting unit not to set the provider time in the most recently received time provider broadcast as the local time of the device.

The receiving unit may be further configured for: broadcasting device time through a Wireless Fidelity WiFi network or by Bluetooth.

A time provider broadcast packet may include: time information;
or information on time and a provider ID;
or information on time, a provider ID, and integrity protection.

Herein, a provider may broadcast provider time. A receiver may receive provider time in one or more time provider broadcasts, select the provider time in one of the one or more time provider broadcasts and set the selected provider time as local time of the receiver. The receiver may receive at least two time provider broadcasts sent by a same provider, and compute a receiving time difference in receiving the at least two time provider broadcasts and a provider time difference between the provider time in the at least two time provider broadcasts. When the receiving time difference is not equal to the provider time difference, the provider time in the most recently received time provider broadcast is not set as the local time of the receiver. With a technical solution herein, compared with related art, complicated operations in time synchronization by manual setting, as well as failure to obtain unified standard time for users with different operators, may be avoided. With a technical solution herein, a user is provided with a way of terminal time setting of more fun, and after time synchronization is achieved, a previous terminal time may be restored at any time, facilitating user operation.

### BRIEF DESCRIPTION OF THE DRAWINGS

Fig.1 is a flowchart of a method for short-distance time synchronization according to an embodiment herein.
Fig.2 is a schematic diagram of a structure of a broadcast packet according to an embodiment herein.
Fig.3 is a schematic diagram of a structure of a broadcast packet according to an embodiment herein.
Fig.4 is a schematic diagram of a structure of a broadcast packet according to an embodiment herein.
Fig.5 is a flowchart of time information accuracy verification according to an embodiment herein.
Fig.6 is a schematic diagram of a structure of a device for short-distance time synchronization according to an embodiment herein.

### BRIEF DESCRIPTION OF THE DRAWINGS

To clearly show a technical problem to be solved, a technical solution, and beneficial effects of the present disclosure, the present disclosure is further elaborated below with reference to the drawings and embodiments.

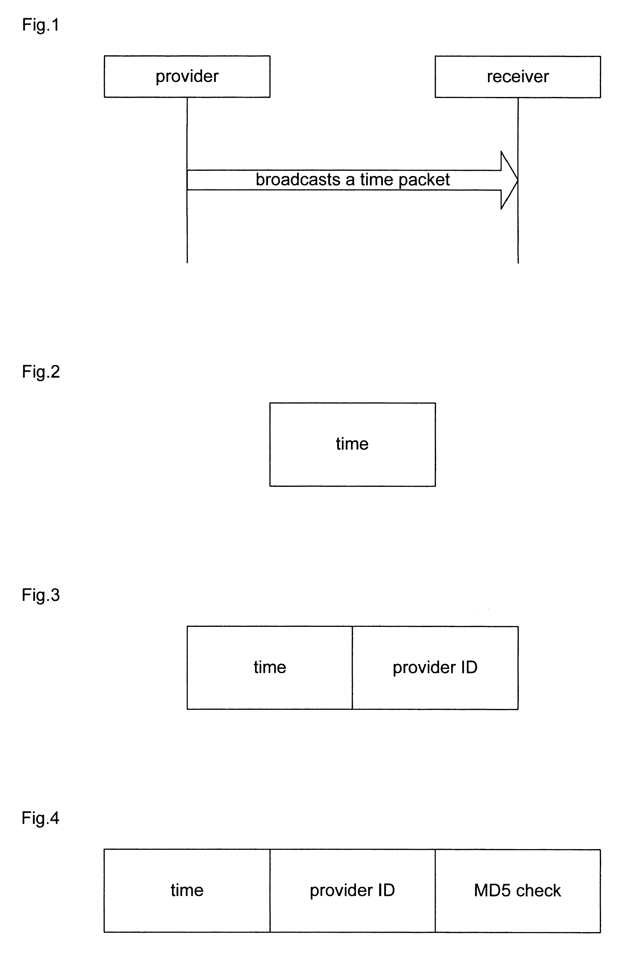

Fig.1 is a flowchart of a method for short-distance time synchronization according to an embodiment herein. As shown in Fig.1, a method for short-distance time synchronization according to an embodiment herein may include: a (time) provider as a sender with standard time; and a receiver as a sender for receiving time information in a time provider broadcast. Herein, a provider mainly may be a terminal capable of time information broadcast, such as a mobile terminal, a Pocket PC, a personal digital assistant, and the like; a receiver mainly may be a terminal capable of receiving time information, such as a mobile terminal, a Pocket PC, a personal digital assistant, and the like.

Herein, a provider may pack local time in a time packet, and broadcast the time packet.

A provider supporting Wireless Fidelity (WiFi) connection may broadcast, in a WiFi network accessed by the provider, a packet packed with provider time information (information on local time of the provider). A provider supporting Bluetooth function may attempt to connect to any apparatus found with Bluetooth function enabled, establish a connection, and send a local time information carrying packet to the other party (receiver).

A receiver may receive provider time in one or more time provider broadcasts, select the provider time in one of the one or more time provider broadcasts and set the selected provider time as local time of the receiver.

A receiver may receive a time packet in a way same as a provider sends a time packet, that is, the receiver may receive a time packet sent by the provider by WiFi, Bluetooth, or the like.

Each of Fig.2 to Fig.4 shows a schematic diagram of a structure of a broadcast packet according to an embodiment herein. As shown in Fig.2, a broadcast packet may include information on only the provider time. When there are more than one providers, the receiver has to distinguish time packets broadcast by different providers. As shown in Fig.3, a broadcast packet may include information on the provider time and on a provider ID. When a user is in an unsafe environment, to ensure safety of a time packet sent by a provider, as shown in Fig.4, the broadcast packet may include information on the provider time, a provider ID, and MD5 check performed on the provider time and the provider ID. This may prevent change of the time packet due to third party attack or a transmission reason during transmission. A receiver may determine integrity of a packet through the MD5 check to see if the packet has been tampered with.

When a wireless network environment between a provider and a receiver is unstable, due to constant disconnection and reestablishment of a wireless link between the provider and the receiver, a time packet sent by the provider may reach the receiver with a varying delay. A big delay will lead to a time difference between the receiver and the provider. To avoid this problem, the receiver may receive at least two time provider broadcasts sent by the same provider, and compute a receiving time difference in receiving the at least two time provider broadcasts and a provider time difference between the provider time in the at least two time provider broadcasts. When the receiving time difference is not equal to the provider time difference, the provider time in the most recently received time provider broadcast is not set as the local time of the receiver. That is, the receiver has to perform time packet inspection. The provider keeps broadcasting time packets at fixed or variable intervals. The provider may always include the current local time in the time packet as content thereof.

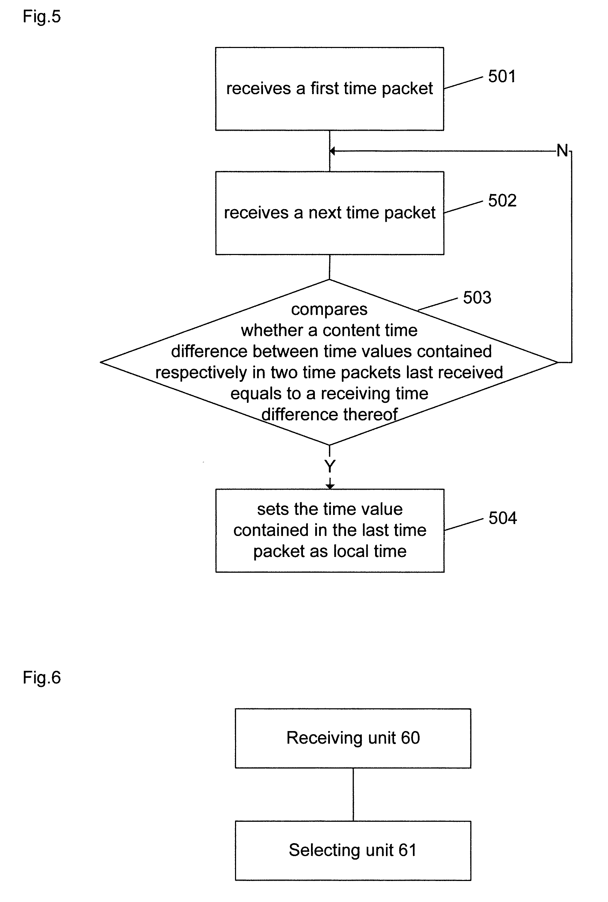

Fig.5 is a flowchart of time information accuracy verification according to an embodiment herein. As shown in Fig.5, the flow may include steps as follows.

In step 501, a receiver receives a first time packet.

The receiver receives the first time packet broadcast by a provider.

In step 502, the receiver receives a next time packet.

After receiving multiple (two or more) time packets sent by the provider, the receiver may perform time packet inspection.

In step 503, the receiver compares whether a content time difference between time values contained respectively in two time packets last received equals to a receiving time difference thereof, i.e., a lapse between receiving the last time packet and receiving the second last time packet.

Given urgency of the time information, after receiving multiple time packets, the receiver has to compute and determine whether the receiving time difference (between time of receiving the last time packet most recently received and time of receiving at least one time packet previously received) is equal to the packet content time difference (difference between time values carried in the two time packets). When the receiving time difference is equal to the content time difference, the time provided in the most recently received time packet may be set as the local time of the receiver, otherwise the time provided in the most recently received time packet may not be set as the local time of the receiver.

The receiver may compute the receiving interval between the most recently received time packet and the last received time packet, compute the content time difference between time contents in the two time packets, compare the receiving interval and the content time difference. When they do not equal to each other, it is considered that there is a delay caused by a wireless environment problem between receiving the two time packets; the receiver will not set the current time, and wait until receiving the next time packet to perform the inspection again. When the receiving interval equals to the content time difference, it is considered that time content in the current time packet is not impacted by any unstable environment caused delay, and the receiver may set the most recently received time content as the receiver time.

In step 504, the receiver sets the time value contained (time content) in the last time packet as local time (the receiver time).

Herein, in setting time, the receiver may save the difference between the current receiver time and time to be set as the receiver time, such that the original user time setting can be restored later as needed by a user.

A technical solution herein may in particular apply to a smart terminal with a communication function such as WiFi, Bluetooth, and the like, expanding the application scope of such a smart terminal, providing a smart terminal user with a wider range of applications.

Fig.6 is a schematic diagram of a structure of a device for short-distance time synchronization according to an embodiment herein. As shown in Fig.6, the device may include a receiving unit 60 and a selecting unit 61.

The receiving unit 60 may be configured for: receiving one or more time provider broadcasts.

The selecting unit 61 may be configured for: selecting provider time in one of the one or more time provider broadcasts and setting the selected provider time as local time of the device.

Based on the device as shown in Fig.6, a device for short-distance time synchronization according to an embodiment herein may further include: a saving unit (not shown in Fig.6) configured for: when the selecting unit 61 selects the provider time in one of the one or more time provider broadcasts and sets the selected provider time as the local time of the device, saving a difference between the local time just set and previous local time. The saving unit may be implemented through a RAM, a FLASH, and the like. The difference between the current device time and time to be set may be saved, such that the original user time setting can be restored later as needed by a user.

Based on the device as shown in Fig.6, a device for short-distance time synchronization according to an embodiment herein may further include a computing unit (not shown in Fig.6) and a determining unit (not shown in Fig.6).

The receiving unit 60 may be further configured for: receiving at least two time provider broadcasts sent by one provider.

The computing unit may be configured for: computing a receiving time difference in receiving the at least two time provider broadcasts and a provider time difference between the provider time in the at least two time provider broadcasts.

The determining unit may be configured for: determining whether the receiving time difference is equal to the provider time difference, and when the two differences are not equal, notifying the selecting unit 61 not to set the provider time in the most recently received time provider broadcast as the local time of the device.

The receiving unit 60 may broadcast device time through a WiFi network or by Bluetooth.

A time provider broadcast packet may include time information, as shown in Fig.2.

Alternatively, when there are more than one providers, the receiver has to distinguish time packets broadcast by different providers. As shown in Fig.3, a time provider broadcast packet may include time information and information on a provider ID.

Alternatively, a time provider broadcast packet may include time information, information on a provider ID and on integrity protection. When a user is in an unsafe environment, to ensure safety of a time packet sent by a provider, as shown in Fig.4, a broadcast packet may include information on the provider time, information on a provider ID and MD5 check performed on the provider time and the provider ID. This may prevent change of the time packet due to third party attack or a transmission reason during transmission. A receiver may determine integrity of a packet through the MD5 check to see if the packet has been tampered with.

Those skilled in the art will know that in a device herein function of a processing unit may be understood with reference to relevant description of the method for short-distance time synchronization. Those skilled in the art will know that in the device shown in Fig.6, function of a processing unit may be implemented by a program run on a processor, or by a specific logic circuit.

Apparently, those skilled in the art will know that processing units or steps herein may be realized using a universal computing device, and may be integrated in a single computing device or distributed in a network formed by multiple computing devices. Optionally, they may be realized using computing device executable program codes, and thus may be stored in a storage device and executed by a computing device. They may each be made into an Integrated Circuit module. Multiple modules or steps herein may be realized by being made into a single Integrated Circuit module. Thus, an embodiment of the disclosure is not limited to a specific combination of hardware and software.

What described are merely embodiments of the disclosure and are not intended to limit the scope of the disclosure.

### Industrial Applicability

With a technical solution herein, compared with related art, complicated operations in time synchronization by manual setting, as well as failure to obtain unified standard time for users with different operators, may be avoided. With a technical solution herein, a user is provided with a way of terminal time setting of more fun, and after time synchronization is achieved, a previous terminal time may be restored at any time, facilitating user operation.

## Claims

1. A method for short-distance time synchronization, comprising:
receiving, by a receiver, provider time in one or more time provider broadcasts, selecting the provider time in one of the one or more time provider broadcasts and setting the selected provider time as local time of the receiver.

2. The method according to claim 1, further comprising:
in selecting the provider time in one of the one or more time provider broadcasts and setting the selected provider time as local time of the receiver, saving, by the receiver, a difference between the local time just set and previous local time.

3. The method according to claim 1 or 2, further comprising:
receiving, by the receiver, at least two time provider broadcasts sent by a same provider, and computing a receiving time difference in receiving the at least two time provider broadcasts and a provider time difference between the provider time in the at least two time provider broadcasts; when the receiving time difference is not equal to the provider time difference, not setting the provider time in the most recently received time provider broadcast as the local time of the receiver.

4. The method according to claim 1, wherein the provider time in one or more time provider broadcasts comprises:
receiving, by the receiver through a Wireless Fidelity WiFi network or by Bluetooth, the provider time in the one or more time provider broadcasts.

5. The method according to any one of claims 1-4, wherein a time provider broadcast packet comprises: information on the provider time;
or information on the provider time and a provider ID;
or information on the provider time, a provider ID, and integrity protection.

6. A device for short-distance time synchronization, comprising a receiving unit and a selecting unit, wherein
the receiving unit is configured for: receiving one or more time provider broadcasts;
the selecting unit is configured for: selecting provider time in one of the one or more time provider broadcasts and setting the selected provider time as local time of the device.

7. The device according to claim 6, further comprising:
a saving unit configured for: when the selecting unit selects the provider time in one of the one or more time provider broadcasts and sets the selected provider time as the local time of the device, saving a difference between the local time just set and previous local time.

8. The device according to claim 6 or 7, further comprising a computing unit and a determining unit, wherein
the receiving unit is further configured for: receiving at least two time provider broadcasts sent by one provider;
the computing unit is configured for: computing a receiving time difference in receiving the at least two time provider broadcasts and a provider time difference between the provider time in the at least two time provider broadcasts;
the determining unit is configured for: determining whether the receiving time difference is equal to the provider time difference, and when the two differences are not equal, notifying the selecting unit not to set the provider time in the most recently received time provider broadcast as the local time of the device.

9. The device according to claim 6, wherein the receiving unit is further configured for: broadcasting device time through a Wireless Fidelity WiFi network or by Bluetooth.

10. The device according to any one of claims 6-9, wherein a time provider broadcast packet comprises: time information;
or information on time and a provider ID;
or information on time, a provider ID, and integrity protection.
